Europäisches Patentamt

(19) European Patent Office

Office européen des brevets

(11) Publication number: **0 432 979 A2**

## (12) EUROPEAN PATENT APPLICATION

(21) Application number: 90313366.8

(22) Date of filing: 10.12.90

(51) Int. Cl.[5]: **G01G 3/147**

(30) Priority: 08.12.89 JP 320238/89

(43) Date of publication of application:
19.06.91 Bulletin 91/25

(84) Designated Contracting States:
DE FR GB IT

(71) Applicant: YAMATO SCALE CO., LTD.
5-22, Saenba-cho
Akashi 673 (JP)

(72) Inventor: Inoue, Shinichi
3-1-30 Utashikiyama
Tarumi-ku, Kobe 655 (JP)

(74) Representative: Burke, Steven David et al
R.G.C. Jenkins & Co. 26 Caxton Street
London SW1H 0RJ (GB)

(54) **Scale for operation under oscillating conditions.**

(57) A scale positioned on a surface and capable of performing weight measurements under oscillating conditions of the weight of a material. A weighing apparatus measures the weight of the material including a tare weight and produces a detection signal representative of the components of the forces and the moments generated by the acceleration and angular acceleration, including gravity, acting on the tare weight and the material in a direction substantially perpendicular to the surface on which the scale is positioned. A compensating weight mechanism, located in close proximity to the weighing apparatus and having a sensing mass, generates a compensating signal representative of the components of the forces and the moments generated by the acceleration and angular acceleration, including gravity, acting on the sensing mass in a direction substantially perpendicular to the surface on which the scale is positioned. A compensating mechanism provides from the detection signal and the compensating signal a weight signal representative of the weight of the material. The center of gravity of the sensing mass, the center of gravity of the tare weight and the center of gravity of the material ate located along a line substantially perpendicular to the surface on which the scale is positioned. The center of gravity of the sensing mass is at a height from the surface on which the scale is positioned which is approximately equal to a height from the surface on which the scale is positioned of the combined center of gravity of the tare weight and the material.

Fig. 1

## SCALE FOR OPERATION UNDER OSCILLATING CONDITIONS

Background of the Invention

This invention relates to a weighing apparatus and, in particular, a scale capable of being used under conditions of oscillation, such as on board a ship.

Scales used on ships (called shipboard scales) are representative of scales which are used under conditions of oscillation. In comparison to conventional scales which are used while fixed in a stationary location on land, these shipboard scales are primarily characterized by the fact that they are used in an environment where all of the following conditions occur : (1) gravitational error caused by differences in the gravitational force acting upon an object in accordance with the location of the ship on the earth's surface ; (2) inclination error caused by the inclination of the ship or the inclination of the location in which the scale is installed ; (3) acceleration error caused by the oscillation of the ship.

For example, if the scale's installation surface oscillates (vibrates) vertically, that displacement $\eta$ and acceleration $\eta''$ can be expressed as the following Equations (1) and (2) :

$$\eta = \eta_o \cdot \sin \phi t \quad (1)$$
$$\eta'' = -\eta_o \cdot \phi^2 \cdot \sin \phi t \quad (2)$$

Here, $\eta_o$ indicates the amplitude of the vertical oscillation, and $\phi$ indicates the angular velocity of the vertical oscillation.

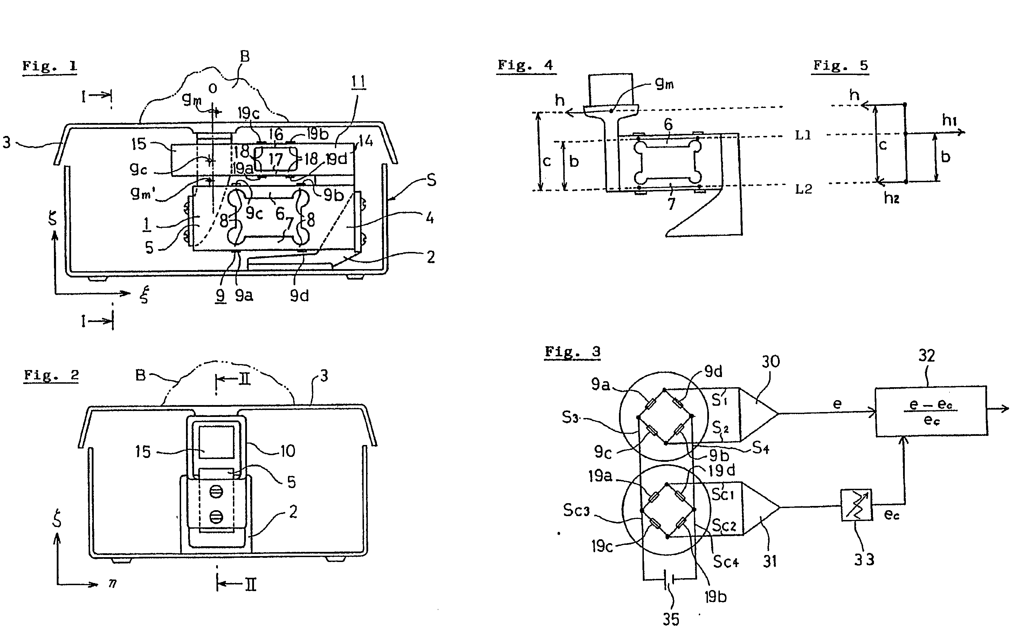

Generally, because a scale having a composition such as that shown in Figs. 1 and 2 can be considered as the vibration system of a spring mass system, the acceleration $\eta''$ mentioned above acts upon the mass $(m_1 + m_2)$ of the tare of the scale S and the material being weighed via the mounting base 2 of said scale S, thus causing said scale to generate a forced oscillation force F expressed by the following Equation (3).

$$F = (m_1 + m_2) \cdot \eta_o \cdot \phi^2 \cdot \sin \phi t \quad (3)$$

It should be noted that "tare" refers to that part of the load acting upon the weighing apparatus which comprises the scale (i.e., a weighing device which includes a weighing apparatus). In addition, the direction of the oscillation force F described above is the opposite from the direction of the acceleration $\eta''$.

If the oscillation of the scale's installation surface causes angular displacement (rotation) to occur, that angular displacement $\alpha$ and the angular acceleration $\alpha''$ can be expressed by the following Equations (4) and (5).

$$\alpha = \alpha_o \cdot \sin(\beta t + \psi) \quad (4)$$
$$\alpha'' = -\alpha_o \cdot \beta^2 \cdot \sin(\beta t + \psi) \quad (5)$$

Here, $\alpha_o$, $\beta$, and $\psi$ are the amplitude, angular velocity, and initial phase angle, respectively, of the oscillation which causes the angular displacement to occur.

The angular acceleration $\alpha''$ acts upon the moment of inertia I around the center of gravity of the aforementioned mass $(m_1 + m_2)$ of the tare of the scale S and the material being weighed, thus generating the forced moment $M_G$ expressed by the following Equation (6).

$$M_G = I \cdot \alpha_o \cdot \beta 2 \cdot \sin(\beta t + \psi) \quad (6)$$

As explained above, for example, if the oscillation of the surface on which the scale is installed causes vertical displacement and angular displacement (rotation) with respect to the center of gravity of the mass $(m_1 + m_2)$ of the tare of the scale and the material being weighed, the aforementioned oscillation force F and moment $M_G$ will affect the scale's measurement value. Therefore, for a shipboard scale, it is inecessary to either have a configuration which is not susceptible to the aforementioned effects on the measurement value or to have a configuration provided with some means capable of compensating for such effects.

The scale described in Japanese Patent Publication (S) 60-29885 is an example of the prior art for a configuration which compensates for the effect of the vertical acceleration caused by vertical oscillation of the installation surface. This scale is provided with a weighing apparatus which measures the weight of the material being weighed, and with a weighing mechanism for compensation provided separately from the weighing apparatus which eliminates the aforementioned effects acting upon that weighing apparatus. The scale is composed so that, using the detection signal e which is output from the weighing apparatus via an amplifier and the detection signal $e_c$ which is output from the weighing mechanism for compensation via an amplifier, $[(e - e_c)/e_c]$ is calculated by a calculation device and $[K \cdot A]$ and $[K_c \cdot A_c]$ are gain-adjusted in advance while the installation surface of the scale is in a nonvibrating state so that $[m_1 \cdot K \cdot A \cdot g = m_c \cdot K_c \cdot A_c \cdot g]$. Wherein, $[K \cdot A]$ is the total gain of the signal $e_c$ with respect to the weighing mechanism for compensation including an amplifier and a gain-adjuster, g is gravity, $m_1$ is the tare mass of the weighing apparatus, and $m_c$ is the mass of the sensing mass part of the weighing mechanism for compensation.

However, the scale in Japanese Patent Publication (S) 60-29885 is able to compensate only for the effects

EP 0 432 979 A2

of the acceleration caused by vertical oscillation of the installation surface. Yet, on a ship, because rolling motion, pitching motion, and other rotary motions are also present, when performing actual weight measurements on board a ship, the scale is affected by multi-dimensional acceleration, angular acceleration, and centrifugal acceleration.

Summary of the Invention

It is an object of this invention to provide a scale capable of reducing the aforementioned effects. In addition, it is an object of this invention to provide a scale capable of essentially eliminating error due to oscillation. Further, it is an object of this invention to provide a scale capable of practical operation even under conditions of oscillation such as oscillations from shipboard operation. It is a further object of this invention to provide a scale which, even under conditions of oscillation in which multidimensional acceleration and angular acceleration act upon the scale, accurate weight measurements can be performed. It is yet another object of this invention to provide a scale which, even it if is on board a ship which is subject to constant oscillation on the sea and which moves to various locations on the earth's surface where the gravitational force differs, the scale is capable of performing essentially accurate weight measurements without being affected by such oscillation and without requiring adjustment each time for the gravity (gravitational acceleration) of the location. It is still another object of this invention to provide a scale which can also be used on board an airplane, and, in the same way as for on board a ship, is capable of performing essentially accurate weight measurements without being affected by acceleration in the direction of gravity which change in accordance with the flying conditions. It is another object of this invention to provide a scale which, when on a ship or an airplane, is capable of making weight measurements without hindrance to practical use even when it is installed in a location far from the center of gravity of the ship or airplane and which it is extremely practical. It is another object of this invention to provide a scale which has an extremely simple configuration, which is highly reliable even when used under conditions of oscillation, and which can also be supplied at low cost.

The invention comprises a scale positioned on a surface and capable of performing weight measurements under oscillating conditions of the weight of a material. Means measures the weight of the material including a tare weight and produces a detection signal representative of the components of the forces and the moments generated by the acceleration and angular acceleration, including gravity, acting on the tare weight and the material in a direction substantially perpendicular to the surface on which the scale is positioned. Means, located in close proximity to said measuring means and having a sensing mass, generates a compensating signal representative of the components of the forces and the moments generated by the acceleration and angular acceleration, including gravity, acting on the sensing mass in a direction substantially perpendicular to the surface on which the scale is positioned. Means amplifies the detection signal to produce a signal e having a gain KA. Means amplifies the compensating signal to produce a signal $e_c$ having a gain $K_cA_c$ such that, when the scale is in a non-oscillating state :

$$m_1KAg'' = m_cK_cA_cg'',$$

where g" is the acceleration component, including gravity, which is substantially perpendicular to the surface on which the surface is positioned when the scale is in a non-oscillating state. Means provides from the detection signal and the compensating signal a weight signal representative of the weight of the material and coresponding to $(e - e_c)/e_c$. The center of gravity of the sensing mass, the center of gravity of the tare weight and the center of gravity of the material are located along a line substantially perpendicular to the surface on which the scale is positioned whereby the effects on the weight signal caused by all forces and moments generated by the acceleration and angular acceleration acting upon the mass of the tare and the material are virtually eliminated.

Brief Description of the Drawings

Fig. 1 is a side sectional view along line II-II in Fig. 2 showing the scale in one embodiment of this invention.
Fig. 2 is a sectional view along line I-I in Fig. 1.
Fig. 3 is a block diagram showing the electrical connections in the scale shown in Figs. 1 and 2.
Fig. 4 is a simplified side view of the weighing apparatus of the scale shown in Figs. 1 and 2, showing the dimensional relationships when generally horizontal forces act upon the scale.
Fig. 5 is a vector diagram showing the forces which act upon the weighing apparatus of Fig. 4 and their dimensional relationships.
Fig. 6 shows the scale on a coordinate system using the center of gravity of an oscillating ship as its center with respect to a stationary coordinate system.

3

Fig. 7 is a side sectional view along line IV-IV in Fig. 8 showing the scale in another embodiment of the invention.

Fig. 8 is a sectional view along line III-III in Fig. 7.

Fig. 9 is a block diagram showing the electrical connections of the weighing mechanism for compensation of the scale shown in Figs. 7 and 8.

## Description of the Preferred Embodiments

In Figs. 1-3, a scale S comprises a weighing apparatus 1, a compensating weighing mechanism. a base frame 2, and a weighing pan or table 3 upon which the material B being weighed is placed.

There are forces or moments generated by acceleration including gravity and angular acceleration acting upon the tare and the material B. The weighing apparatus 1 is configured so that, primarily, the only signal generated represents the component of force acting perpendicularly to the surface on which the scale is installed. In other words, the weighing apparatus 1 is composed in a parallelogram type construction with strain gauges 9a-9d positioned midway along the width of elastic fulcrums 8.

In the same way, there are forces or moments generated by acceleration including gravity and angular acceleration acting upon a sensing mass part 15. The weighing mechanism 11 is configuted so that, primarily, the only signal generated represents the component of force perpendicular to the surface on which the scale is installed, just as for the weighing apparatus 1. The weighing mechanism 11 has a parallelogram type construction.

Specifically, the weighing apparatus 1 has a foursided external configuration formed by a mounting part 4 attached to the frame 2, a loading part 5 positioned longitudinally opposite the mounting part, and a pair of horizontal beams 6 and 7 which horizontally join the upper and lower ends, respectively, of the parts 4 and 5. The four joints of these various members are thin in order to reduce the rigidity and form elastic fulcrums 8, to each of which is attached one strain gauge 9a, 9b, 9c, or 9d.

The compensating weighing mechanism 11 also has the same basic composition as the weighing apparatus 1, with a sensing mass part 15 formed in the place corresponding to the loading part 5 of the weighing apparatus 1 so that this mass part 15, a mounting part 14, and a pair of thin horizontal beams 16 and 17 form a four-sided external configuration. The four areas where the beams 16 and 17 are joined to the parts 14 and 15 are elastic fulcrums 18, to each of which is attached a strain gauge 19a, 19b, 19c, or 19d.

Preferably, the compensating weighing mechanism is configured to detect, with a high degree of sensitivity and accuracy, the component of force which is perpendicular to the surface on which the scale is installed, including the actual gravitational force occurring at the place where the weight measurement is being made. In particular, the compensating weighing mechanism 11 is configured so that, in addition to the mass of the sensing mass part 15 being relatively large, the spring constant of the compensating weighing mechanism 11 is small. It is also preferable that, the characteristic frequency of the oscillation of the sensing mass part 15 of said weighing mechanism 11 for compensation is set to a frequency within or slightly higher than the range in which the characteristic oscillation frequency of the weighing apparatus 1 changes as a result of the loading of the material B. This permits amplification of the signal from the compensating weighing mechanism 11 and performs correct compensation.

The weighing table 3 is attached to the loading part 5 of said weighing apparatus 1 via a table frame 10. The loading part 5, table frame 10, and table 3 comprise the combined tare of this scale. They are arranged so that the combined center of gravity $g_m$ (the center of gravity of the tare $m_1$ alone is $g_m'$) of the mass $m_1$ of this tare and the mass $m_2$ of the material B and the center of gravity $g_c$ of the sensing mass part 15 are positioned substantially along a line 0 perpendicular to the surface on which the scale is installed. These components are securely attached to the frame 2 so that the center of gravity $g_c$ of the sensing mass part 15 is positioned directly beneath the combined center of gravity $g_m$ substantially along the vertical center line 0 of the table 3. For example, the center of gravity $g_c$ of the sensing mass part 15 may be positioned between the center of gravity $g_m'$ of the tare $m_1$ and the combined center of gravity $g_m$ of the tare $m_1$ and the material B, as illustrated in Figure 1. The value of the component of acceleration perpendicular to the surface which is the sum of the gravity and acceleration at the position of the combined center of gravity of the tare and the material will be about the same as the value of the component of acceleration perpendicular to the surface which is the sum of the gravity and acceleration at the position of the center of gravity of the sensing mass so that the weight measurements have a high degree of accuracy under oscillating conditions. As shown in Figs 1 and 2, the table frame 10 is structurally designed so that the sensing mass part 15 does not come in contact with the table frame 10.

As shown in Fig. 3, the strain gauges 9a-9d of the weighing apparatus 1 and the strain gauges 19a-19d of the compensating weighing mechanism 11 are connected respectively so that they comprise two Wheatstone bridge circuits. The output terminals $S_1$, $S_2$ and $Sc_1$, $Sc_2$ of these circuits are connected to amplifiers 30 and 31, respectively.

The output terminal of amplifier 30 is connected to a compensation device 32, and the amplifier 31 is also connected to this device 32 via gain adjuster 33 such as a variable resistor which adjusts the gain of the output signal. Thus, a signal e generated by the amplifier 30 is input to the compensation device 32. Meanwhile, a signal which passes through the amplifier 31 undergoes gain-adjustment by a signal level adjuster 33. The adjustment is set in advance while the installation surface of the scale is in a non-vibrating state according to the following formula :

$$[m_1 \cdot K \cdot A \cdot g'' = m_c \cdot K_c \cdot A_c \cdot g'']$$

The gain-adjusted signal $e_c$ is input to the compensation device 32.

In the above gain-adjustment formula, K·A is the total gain of the signal e from the amplifier 30 provided by the weighing apparatus 1 including amplifier 30 ; $K_c \cdot A_c$ is the total gain of the signal $e_c$ through the adjuster 33 provided by the compensation weighing mechanism 11 including amplifier 31 and gain-adjuster 33 ; g'' is the acceleration component, including gravity, which is perpendicular to the surface on which the scale is installed when the surface is in a non-vibrating state ; $m_1$ is the tare mass of the weighing apparatus 1 ; and $m_c$ is the mass of the sensing mass part 15.

The compensation device 32 uses the two signals e and $e_c$ to generate a weight measurement signal equal to $(e - e_c)/e_c$. The output terminal of the compensation device 32 is connected to a display device (not shown) in order to display the weight measurement value. The input terminals $S_3$, $S_4$ and $Sc_3$, $Sc_4$ of the strain gauges 9a-9d and the strain gauges 19a-19d which comprise the Wheatstone bridge circuits are connected to a power supply 35.

The weighing apparatus 1 constitutes means for measuring the weight of the material B including a tare weight $m_1$ and for producing a detection signal on terminals $Sc_1$, $Sc_2$ representative of the components of the forces and the moments generated by the acceleration and angular acceleration, including gravity, acting on the tare weight $m_1$ and the material B in a direction substantially perpendicular to the surface on which the scale is positioned. The compensating weighing mechanism constitutes means, located in close proximity to the measuring means and having a sensing mass $m_c$, for generating a compensating signal on terminals $S_1$, $S_2$ representative of the components of the forces and the moments generated by the acceleration and angular acceleration, including gravity, acting on the sensing mass $m_c$ in a direction substantially perpendicular to the surface on which the scale is positioned. The gain adjuster 33 constitutes means for providing from the detection signal and the compensating signal a weight signal representative of the weight of the material.

The operation of this scale under conditions of oscillation (for example, on board a ship) is as follows.

For example, even if the deck on which the scale is installed oscillates both vertically and horizontally, because the weighing apparatus 1 and the compensating weighing mechanism 11 are of the parallelogram type described above, only the component of force perpendicular to the installation surface of the scale is detected. Referring first to the weighing apparatus 1, when the material B is loaded onto the table 3, tensile force acts upon the strain gauges 9a and 9b and compressive force acts upon the gauges 9c and 9d, so that the gauges 9a and 9b generate a positive output, and the gauges 9c and 9d generate a negative output.

As explained above and as shown in Fig. 3, because each of the strain gauges 9a-9d are connected to a Wheatstone bridge circuit, the positive output of the gauges 9a and 9b and the negative output of the gauges 9c and 9d cause all of the electric potential differences (detection signal values) between output terminals $S_1$ and $S_2$ to increase, and the weight value of the material B is measured.

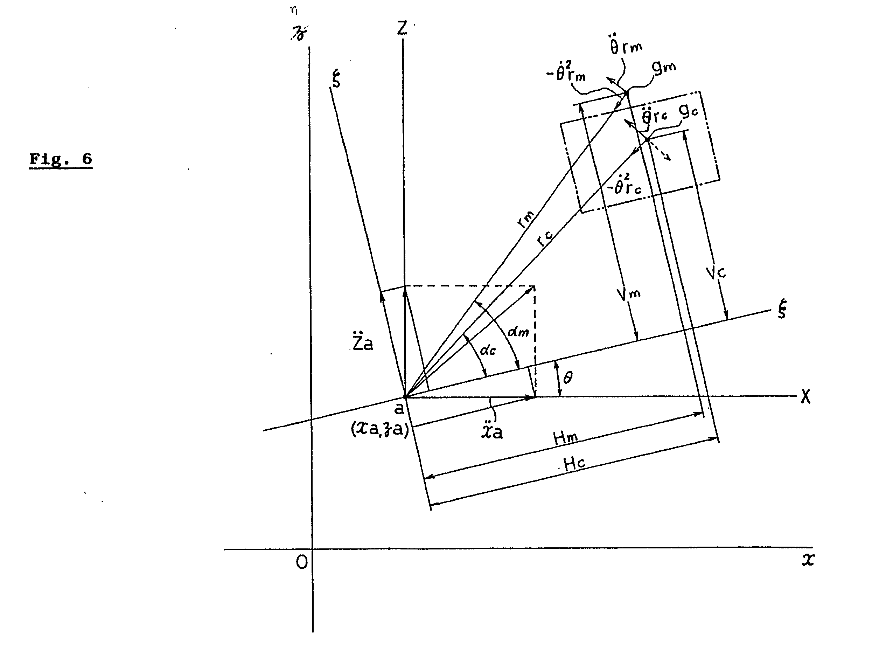

As shown in Fig. 4, if force h parallel to the installation surface of the scale acts upon this weighing apparatus 1, as shown in the model in Fig. 5, the tensile force $h_1$ acts upon a line $L_1$ passing through the center of the thickness of the thin parts of the elastic fulcrums 8 of the lower beam 7.

The forces $h_1$ and $h_2$ can be expressed as follows using the generally horizontal force h, respectively

$$h_1 = \frac{h \cdot c}{b}$$

$$h_2 = -\frac{c-b}{b} \cdot h$$

Here, b indicates the distance between the lines $L_1$ and $L_2$, and c indicates the distance between the line $L_2$ and the combined center of gravity $g_m$ upon which the force h is acting.

Because the strain gauges are connected to Wheatstone bridge circuits, the tensile force $h_1$ acts upon both the gauges 9b and 9c, and the compressive force $h_2$ acts upon both the gauges 9a and 9d, thus causing the effects of the force h to cancel each other so that they do not appear as electric potential differences (detection signal values) between output terminals $S_1$ and $S_2$.

If force in the direction perpendicular to the plane of Figs. 1 or 6, referred to as the η axis direction, acts upon the weighing apparatus 1, the resistance values of the gauges do not change. This is because the strain gauges 9a-9d are positioned (attached) on the center line of the width of the respective beams. As a result, there is no detection signal output with respect to this force in the $\eta$ axis direction.

Virtually no detection signals appear as a result of moments around the $\zeta$ axis (Figs. 1 and 6). The reason for this is that the strain gauges 9a-9d are positioned on the center line of the width of the respective beams. Also, virtually no detection signals appear as a result of moments around the $\eta$ axis. The reason for this is that, although the moment around the $\eta$ axis causes the same type of force to be generated on the beams 6 and 7 as when the generally horizontal force h acts upon the weighing apparatus, the signals output from the pair of gauges 9b and 9c and those output from the pair of gauges 9a and 9d cancel each other. Concerning the angular acceleration around the generally vertical $\zeta$ axis, because ships are generally not capable of making sharp turns, the angular acceleration around this axis is extremely small, so the moment generated by this angular velocity is substantially zero. Thus, there is also no need to take into consideration a detection signal corresponding to moments around the $\zeta$ axis.

The operating effects described above for the weighing apparatus 1 are also the same for the compensating weighing mechanism 11.

The gain of the two signals input to the compensation device 32 is gain adjusted, prior to weight measurement value calculations by the device 32, by the amplifiers 30 and 31 and the adjuster 33. Of the forces and moments generated by multi-dimensional vibration acting upon the tare of the weighing apparatus and the material B and upon the sensing mass part of the weighing mechanism for compensation, only the two signals generated by the components of force perpendicular to the surface on which the scale is installed are input to the compensation device 32 and calculated. Thus, the error signals mutually cancel each other out.

The scale is preferably configured so that the center of gravity $g_c$ of the sensing mass part 15 is positioned on or neat the same generally vertical line O as the combined center of gravity $g_m$ of the material B and the tare. As a result, the effect caused by the angular acceleration $(\ddot{\theta})$ of the oscillation, which has a relatively large effect on the scale's weight measurement value, is almost completely eliminated. Consequently, the gravity signal from the compensation device 32 which determines the weight measurement value is output as a value which is approximately proportionate to the weight of the material B.

The center of gravity $g_c$ of the sensing mass part 15 and the combined center of gravity $g_m$ of the material B and the tare are located in spatially different positions. In addition, as will be explained later, the values of the centrifugal acceleration $[\dot{\theta}^2 \cdot V]$ and of the tangential acceleration $[\ddot{\theta} \cdot H]$ are different because of the acceleration which occurs at each of those positions. However, the compensation calculation performed by the compensation device 32 make it possible to compensate for most of the error caused by acceleration as explained above, so that only a very small amount of error remains. Although this error could be reduced to zero by making the positions of the centers of gravity $g_c$ and $g_m$ spatially identical, this type of configuration would be difficult to physically realize. For this reason, for scales having the compositions shown in the drawings, which are realizable configurations, the effect of the difference in spatial position of $g_c$ and $g_m$ on the weight measurement error was investigated. As a result, it was theoretically postulated that the scale having the configuration of this embodiment is capable of performing weight measurements without generating error large enough to present a problem in practical use.

The following is a more detailed explanation of the various operations described above using numerical equations in the process of developing the weight measurement value. In this explanation, in order to deal with the problems of all of the acceleration generated by the oscillation of an actual ship, it would actually be necessary to deal with motion in six dimensions. However, it would be extremely complex to deal with motion in six dimensions in order to explain the effects of the acceleration which acts upon a scale installed on board a ship. Therefore, for the sake of convenience, the ship will be considered to undergo motion in three dimensions.

Fig. 6 shows the accelerations, etc., which act upon the centers of gravity, such as the combined center of gravity $g_m$ and the center of gravity $g_c$ of the sensing mass, for a scale S installed so that the plane of Fig. 1 conforms to the transverse section of the ship. It is assumed that the scale S is thus installed on board a ship, and that the ship is moving straight ahead at a constant speed with no pitching motion, and it undergoes motion in the three dimensions of : (a) vertical oscillation, (b) horizontal oscillation at right angles to the direction of forward motion, and (c) rotation (rolling) around the ship's center of gravity.

In Fig. 6, [$\eta$ O $\chi$] is the stationary space coordinate system on the place confirming to the transverse section of the ship, [Z a X) is the coordinate system with respect to the ship's center of gravity a, and [$\zeta$ a $\xi$] is the coordinate system when system [Z a X] is tilted by angle $\theta$ (when the ship rolls) as a result of the oscillation of the ship. The angle, angular velocity, and angular acceleration of the ship's rolling are represented by $\theta$, $\dot{\theta}$, and $\ddot{\theta}$, respectively, the horizontal position and acceleration at the ship's center of gravity a as $\chi_2$ and $\ddot{\chi}_2$, and

the vertical position and acceleration as $\eta_a$ and $\ddot{\eta}_a$. The distances from the combined center of gravity $g_m$ of the material B and the tare to the ship's center of gravity and from the center of gravity $g_c$ of the sensing mass part 15 to the ship's center of gravity a are represented as $r_m$ and $r_c$, respectively, and the values of these centers of gravity $g_m$ and $g_c$ on the [ξ a ζ] coordinate system are $H_m$ and $H_c$, respectively, on the ξ axis and $V_m$ and $V_c$, respectively on the ζ axis.

Now, if the ship rolls around the axis perpendicular to the plane of Fig. 6 and extending through its center of gravity a and this rolling motion is the harmonic vibration expressed by :

$$\theta = \theta_1 + \theta_0 \cdot \sin wt \quad (10)$$

(Provided that $\theta_1$ is the initial inclination angle.)

then the angular velocity $\dot{\theta}$ and the angular acceleration $\ddot{\theta}$ become :

$$\dot{\theta} = \theta_0 \cdot \omega \cdot \cos wt \quad (11)$$

$$\ddot{\theta} = -\theta_0 \cdot \omega^2 \cdot \sin wt \qquad \ldots \quad (12)$$

Because the combined center of gravity $g_m$ is located away from the ship's center of gravity a by the distance $r_m$, this rolling motion causes, as shown in Fig. 6, centrifugal acceleration of the value $[-\dot{\theta}^2 \cdot r_m]$ to act upon the combined center of gravity $g_m$ in the direction linking the centers of gravity a and $g_m$. It further causes tangential acceleration of $[\ddot{\theta} \cdot r_m]$ to act upon the combined center of gravity $g_m$ in the direction perpendicular to the direction linking the centers of gravity a and $g_m$.

As shown in Fig. 6, if each of the above accelerations is considered as occurring on the [ξ a ζ] coordinate system, which shows the oscillation of the ship, the acceleration in the ξ direction caused by the angular velocity becomes :

$$-\dot{\theta}^2 \cdot rm \cdot \cos \alpha_m = -\dot{\theta}^2 \cdot H_m \quad (13)$$

And the acceleration in the ζ direction caused by the angular velocity becomes :

$$-\dot{\theta}^2 \cdot r_m \cdot \sin \alpha_m = -\dot{\theta}^2 \cdot V_m \quad (14)$$

In addition, the acceleration in the ξ direction caused by the angular acceleration becomes :

$$-\ddot{\theta} \cdot r_m \cdot \sin \alpha_m = -\ddot{\theta} \cdot V_m \qquad \ldots \quad (15)$$

And the acceleration in the ζ direction caused by the angular acceleration becomes :

$$\ddot{\theta} \cdot r_m \cdot \cos \alpha_m = \ddot{\theta} \cdot H_m \qquad \ldots \quad (16)$$

The accelerations $\ddot{X}_a$ and $\ddot{\eta}_a$ described above and gravity g act upon the ship's center of gravity a, and the resulting accelerations $\ddot{\xi}_a$ and $\ddot{\zeta}_a$ in the ξ and ζ axis directions can be expressed as follows :

$$\ddot{\xi}_a = (g + \ddot{\eta}_a) \sin \theta + \ddot{X}_a \cos \theta \qquad \ldots \quad (17)$$

$$\ddot{\zeta}_a = (g + \ddot{\eta}_a) \cos \theta - \ddot{X}_a \sin \theta \qquad \ldots \quad (18)$$

As a result, the acceleration which acts upon the combined center of gravity $g_m$ of the scale's tare and the material B consists of the centrifugal acceleration and tangential acceleration generated by the rolling as described above, and these accelerations can be expressed as follows.

$$\ddot{\xi}_m = (g + \ddot{\eta}_a) \sin \theta + \ddot{X}_a \cos \theta - \dot{\theta}^2 H_m - \ddot{\theta} V_m \quad \ldots \quad (19)$$

$$\ddot{\zeta}_m = (g + \ddot{\eta}_a) \cos \theta - \ddot{X}_a \sin \theta - \dot{\theta}^2 V_m + \ddot{\theta} H_m \quad \ldots \quad (20)$$

These accelerations

$$\ddot{\xi}_m \quad \text{and}$$

7

$\ddot{\zeta}_m$ act upon the total mass m (= $m_1$ + $m_2$) of the scale's tare and the material B, and the ship's rollling angular acceleration $\ddot{\theta}$ acts upon the moment of intertia $I_m$ around the combined center of gravity $g_m$ of the scale's tare and the material, thus generating the following forces $f_{m\xi}$ and $f_{m\zeta}$ and the moment $g_{mn}$.

$$f_{m\xi} = -m \cdot \ddot{\xi}_m \qquad \ldots (21)$$

$$f_{m\zeta} = -m \cdot \ddot{\zeta}_a \qquad \ldots (22)$$

$$g_{mn} = -I_m \cdot \ddot{\theta} \qquad \ldots (23)$$

The following centrifugal acceleration, tangential acceleration, and angular acceleration also act upon the mass $m_c$ of the sensing mass part 15 of the weighing mechanism 11 for compensation, and upon the moment of inertia $I_c$ around its center of gravity $g_c$, and thus generate the forces and the moment shown below.

The accelerations $\ddot{\xi}_c$ and $\ddot{\zeta}_c$ acting upon the mass $m_c$ become as follows :

$$\ddot{\xi}_c = (g + \ddot{n}_a) \sin \theta + \ddot{x}_a \cos \theta - \dot{\theta}^2 H_c - \ddot{\theta} V_c \quad \ldots (24)$$

$$\ddot{\zeta}_c = (g + \ddot{n}_a) \cos \theta - \ddot{x}_a \sin \theta - \dot{\theta}^2 V_c + \ddot{\theta} H_c \quad \ldots (25)$$

The accelerations $\ddot{\xi}_c$ and $\ddot{\zeta}_c$ act upon the mass $m_c$ and the ship's rolling angular acceleration $\ddot{\theta}$ acts upon the moment of inertia $I_c$ around the center of gravity $g_c$ of the sensing mass, thus generating the forces $f_{c\xi}$ and $f_{c\zeta}$ and the moment $g_{cn}$.

$$f_{c\xi} = -m_c \cdot \ddot{\xi}_c \qquad \ldots (26)$$

$$f_{c\zeta} = -m_c \cdot \ddot{\zeta}_c \qquad \ldots (27)$$

$$g_{cn} = -I_c \cdot \ddot{\theta} \qquad \ldots (28)$$

When the ship undergoes motion in three dimensions as described above, the scale S generates only the signal for the component of force perpendicular to the scale's installation surface of the forces and the moment acting upon the combined center of gravity $g_m$ of the tare and the material B. In the same way, only the signal for the component of force perpendicular to the scale's installation surface is generated by the compensating weighing mechanism 11, as a result of the forces and the moment acting upon the center of gravity $g_c$ of the sensing mass.

In order to prevent e and $e_c$ from appearing as negative values, hereafter, the signals generated by forces opposite to the coordinate system (forces facing downward in the direction of gravity) are defined as being positive. Thus, the weight signal e output from the weighing apparatus 1 is as follows.

$$e \fallingdotseq C_m \cdot f_{m\zeta}$$

$$= C_m \cdot m [(g + \ddot{n}_a) \cos \theta$$

$$- \ddot{x}_a \sin \theta - \dot{\theta}^2 V_m + \ddot{\theta} H_m] \qquad \ldots (29)$$

Where $C_m = K \cdot A$ (coefficient)
In the same way, the weight signal $e_c$ from the weighing mechanism 11 is as follows :

$$e_c \fallingdotseq C_s \cdot f_{c\zeta}$$

$$= C_s \cdot m_c \; [(g + \ddot{\eta}_a) \cos \theta$$

$$- \ddot{X}_a \sin \theta - \dot{\theta}^2 V_c + \ddot{\theta} H_c] \qquad \ldots \quad (30)$$

Where $C_c = K_c \cdot A_c$ (coefficient).

Now, if it is assumed that the ship is in a stationary state, then $\ddot{\eta}_a = O$, $\ddot{X}_a = O$, $\theta = \theta_1$, $\dot{\theta} = O$, and $\ddot{\theta} = O$. If it is also assumed that there is no material B loaded on the scale, then $m_2 = O$; thus, $m = m_1$, and Equations (29) and (30) will become as follows.

$$e = C_m \cdot m_1 \cdot g \cdot \cos \theta_1$$

$$= K \cdot A \cdot m_1 \cdot g \cdot \cos \theta_1 \qquad \ldots \quad (31)$$

$$e_c = C_c \cdot m_c \cdot g \cdot \cos \theta_1$$

$$= K_c \cdot A_c \cdot m_c \cdot g \cdot \cos \theta_1 \qquad \ldots \quad (32)$$

In this case, because there is no material B loaded on the scale, the output from the compensation device 32 must be zero. Thus, because the numerator of Equation (7) which expresses the output from the compensation device 32 must be zero, from this numerator of Equation (7) and Equations (31) and (32), the following results are obtained :

$$e - e_c = C_m \cdot m_1 \cdot g \cdot \cos \theta_1 - C_c \cdot m_c \cdot g \cdot \cos \theta_1 = O \quad (33)$$

Thus,

$$C_s = m_1/m_c \cdot C_m \quad (34)$$

Therefore, with this scale, the relationships of Equations (31), (32), and (33) are satisfied when zero adjustment is performed using the adjuster for compensation 33 while the installation surface of the scale is in a non-vibrating state. This zero adjustment corresponds to gain-adjustment of the values of $C_m = K \cdot A$ and $C_c = K_c \cdot A_c$ which express the relationship of Equation (34). Using a scale which has been appropriately gain-adjusted in advance in this way, when the mass $m_2$ of the material is measured, the output from the compensation device 32 becomes as follows :

$$\frac{e - e_c}{e_c} = \frac{C_m \cdot m \cdot \ddot{\zeta}_m - C_c \cdot m_c \cdot \ddot{\zeta}_c}{C_c \cdot m_c \cdot \ddot{\zeta}_c} \qquad \ldots \quad (35)$$

Here, from Equations (20) and (25), the $\ddot{\zeta}_m$ and $\ddot{\zeta}_c$ in Equation (35) become as follows :

$$\ddot{\zeta}_m = (g + \ddot{\eta}_a) \cos \theta - \ddot{X}_a \sin \theta - \dot{\theta}^2 V_m + \ddot{\theta} H_m$$

$$\ddot{\zeta}_O = (g + \ddot{\eta}_a) \cos \theta - \ddot{X}_a \sin \theta - \dot{\theta}^2 V_c + \ddot{\theta} H_c$$

Thus, from these equations, if

$$(g + \ddot{\eta}_a) \cos \theta - \ddot{X}_a \sin \theta \doteq g'$$

is assumed, then Equations (20) and (25) become as follows :

$$\ddot{\zeta}_m = g' - \dot{\theta}^2 V_m + \ddot{\theta} H_m$$

$$= g'[1 - 1/g' (\dot{\theta}^2 V_m - \ddot{\theta} H_m)] \qquad \ldots \quad (20)'$$

$$\ddot{\zeta}_c = g' - \dot{\theta}^2 V_c + \ddot{\theta} H_c$$

$$= g'[1 - 1/g' (\dot{\theta}^2 V_c - \ddot{\theta} H_c)] \qquad \ldots \quad (25)'$$

Generally, with the exception of extremely large oscillation, because $[(\dot{\theta}^2 V_m - \ddot{\theta} H_m)/g']$ and $[(\dot{\theta}^2 V_c - \ddot{\theta} H_c)/g']$ in Equations (20)' and (25)' are both less than one, if the higher-order remainders are omitted when carrying out the division of Equation (35), the output of the compensation device 32 becomes as follows :

$$\frac{e - e_c}{e_c} = \frac{m \cdot C_m}{m_c \cdot C_c} \cdot \frac{[1 - 1/g'(\dot{\theta}^2 \cdot V_m - \ddot{\theta} \cdot H_m)]}{[1 - 1/g'(\dot{\theta}^2 \cdot V_c - \ddot{\theta} \cdot H_c)]} - 1$$

$$\cong \frac{m \cdot C_m}{m_c \cdot C_c} \cdot [1 - \frac{1}{g'} \{\dot{\theta}^2(V_m - V_c) - \ddot{\theta}(H_m - H_c)\}] - 1$$

$$\cong (\frac{m_2}{m_1} + 1) \cdot [1 - \frac{1}{g'} \{\dot{\theta}^2(V_m - V_c) - \ddot{\theta}(H_m - H_c)\}] - 1$$

$$\ldots \quad (35)'$$

It is clear that it is desirable that the value of the second term in the brackets [] of the first term of Equation (35)' be less than one.

In the above equation $[V_m - V_c]$ is the dimensional difference perpendicular to the installation surface of the scale between the combined center of gravity $g_m$ of the tare and the material B and the center of gravity $g_c$ of the sensing mass part 15. $[H_m - H_c]$ is the dimensional difference parallel to the installation surface between the centers of gravity $g_m$ and $g_c$. It is a theoretical condition that $[V_m - V_c]$ and $[H_m - H_c]$ be zero, in which case the compensation would be performed perfectly.

If $[\dot{\theta}^2 (V_m - V_c)]$ and $[\ddot{\theta} (H_m - H_c)]$ in Equation (35)' are compared, because the latter is much larger than the former, if the latter is zero, i.e., if $[H_m - H_c = 0]$, then this indicates that the effects of oscillation can be effectively eliminated. In other words, if the centers of gravity $g_m$ and $g_c$ are positioned on approximately the same line perpendicular to the installation surface, it is possible to obtain essentially accurate weight measurement values even under conditions of oscillation, such as on board a ship.

The explanation thus far has dealt only with the rolling motion of the ship. For the pitching motion as well, the forces acting upon the centers of gravity $g_m$ and $g_c$ as a result of the acceleration component generated in the $\zeta$ axis direction of the tangential acceleration and centrifugal acceleration must be considered. While there are some additional terms which must be added to Equation (35)', as long as $[V_m - V_c]$ and $[H_m - H_c]$ are zero, then the compensation is performed perfectly.

Concerning the error contained in the weight measurement signal, the term for the error which is directly related to the installation location of the scale, or more precisely, to the distance $(V_m, H_m)$ from the position of the ship's center of gravity to the scale's installation location, is not contained in Equation (35)'. Thus, in other words, even if the scale is installed on board a ship at a location far from the ship's center of gravity, the value of the error will not increase substantially over that for a weight measurement made near the ship's center of gravity.

Now, supposing that the scale is installed on board a ship in a substantially horizontal state ($\theta_1 = O°$) and the ship is rolling (i.e., $\ddot{\eta}a = O$, $\ddot{X} = O$), then $[\theta = \theta_0 \cdot \sin \cdot \omega t]$. At a rolling cycle of 6.28 seconds and an amplitude of $\theta_0 = 0.1$ rad ($= 5.73°$), if $V_m - V_c = 10$ cm and $H_m - H_c = 10$ cm, then $\omega = 2\pi/T$ ($= 1$ rad/sec). Substituting these values in Equations (11) and (12) and performing the calculations results in the following equations. (Note that, in order to simplify the calculation, $g' = g$ is assumed.)

$$\frac{\dot{\theta}^2 \ (V_m - V_c)}{gmax} = \frac{1}{9800} \qquad \dots (36)$$

$$\frac{\ddot{\theta} \ (H_m - H_c)}{gmax} = \frac{1}{980} \qquad \dots (37)$$

The value of Equation (37) generated by the tangential acceleration is ten times the value of Equation (36) generated by the centrifugal acceleration. This clearly shows that the effect of the value of $[H_m - H_c]$ on the error is ten times as large as that of the value of Equation (36) generated by the centrifugal acceleration. Thus, the effect of the value of $[H_m - H_c]$ on the error is ten times as large as that of the value of $[V_m - v_c]$.

Therefore, because the centers of gravity $g_m$ and $g_c$ are approximately aligned perpendicularly with the scale's installation surface, it is theoretically verified that essentially accurate weight measurement values are obtained even under conditions of oscillation, such as on board a ship.

The preferred, actual configuration of the scale is to align the center of gravity of the tare comprised of the loading part 5, the table frame 10, etc., with the approximate center of the top of the flat table 3. The center of gravity $g_c$ of the sensing mass part 15 is positioned beneath the table 3 close to the line which passes through the center of gravity of the tare perpendicular to the installation surface. In order to make accurate weight measutements, it is preferred that the ideal position for the placement of the material B be clearly matked at approximately the center of the top surface of the table 3.

Although it is preferred that the value of $[V_m - V_c]$ in Equation (35) be zero, the results of simulations showed that the range which can be essentially allowed is for the value to be approximately 10 to 20 cm.

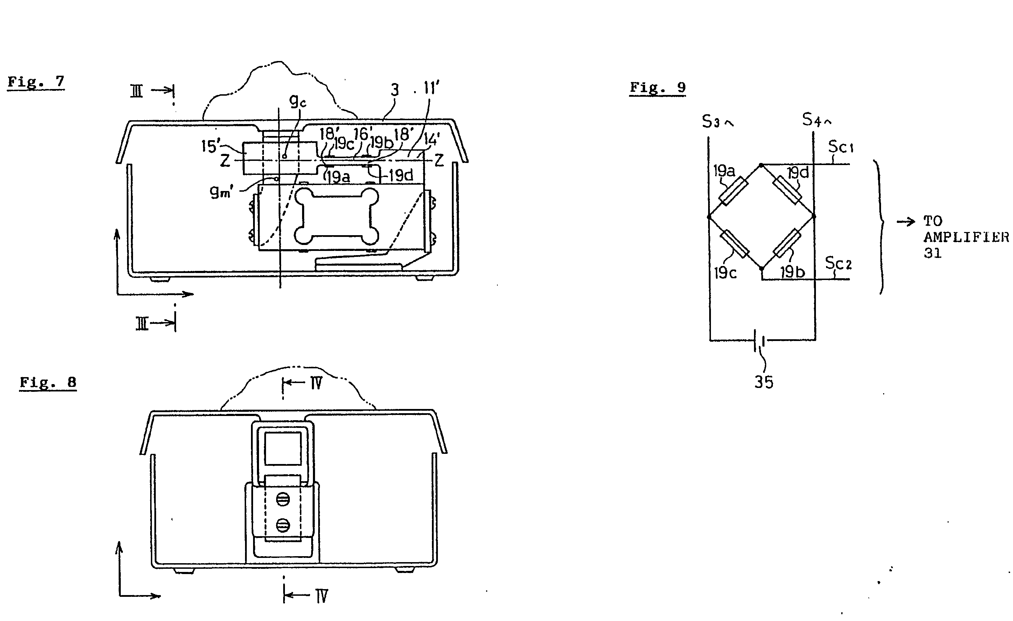

Next, the following is an explanation of another embodiment of this invention in reference to Figs. 7 through 9.

For the scale in this embodiment, the construction of the weighing mechanism 11' for compensation is different from that of the embodiment explained above. As shown in Figs. 7 and 8, for the weighing mechanism 11' for compensation, a single thin beam 16' extends from a mounting part 14' which is mounted to the base of the scale to a sensing mass part 15' formed on the end of this beam. Strain gauges 19a-19d are mounted on the center line of the width at four locations, two on top and two on bottom at two small-section parts of the beam 16' with two close to the mounting part 14' and two close to the sensing mass part 15'. These two small-section parts are of symmetrical configurations with respect to the center line (neutral axis) z-z of the thickness of the beam 16' and have the same section modulus. The center of gravity $g_c$ of the sensing mass part 15' is positioned closely beneath the center of the weighing table 3. As shown in Fig. 9, the strain gauges 19a-19d are connected electrically to a Wheatstone bridge circuit just as in the embodiment already explained.

Although the basic configuration of the circuit is the same, the operation of the circuit in this embodiment differs from that of the embodiment shown in Fig. 1. With respect to a force acting perpendicularly to the installation surface of the scale on the sensing mass part 15', the gauge 19b generates positive distortion output, the strain gauge 19d generates negative distortion output, and both function to increase the value of the output between the terminals $Sc_1$ and $Sc_2$. In comparison, the gauge 19c generates positive distortion output which is less than the values of the gauges 19b and 19d, and the gauge 19a generates negative distortion output which is less than the values of the gauges 19b and 19d. Because the output between the terminals $Sc_1$ and $Sc_2$ of the Wheatstone bridge circuit appears as the differential output between the output value of the gauges 19b and 19d and that of the gauges 19c and 19a, the output value is slightly smaller than that in the first embodiment.

This embodiment has the characteristic that, even if oscillation (for example, rolling) around the axis perpendicular to the plane of Fig. 7 causes a moment (Equation (28)) to be generated on the sensing mass part 15', because this moment will generate an output of the same magnitude as that of the two pairs of strain gauges just described, the aforementioned differential operation of this circuit's composition will cause the moment output to be canceled so taht no moment output is generated. In other words, while the weighing apparatus 1 and the weighing mechanism 11 for compensation of the first embodiment are configured so that the parallelogram-shaped mechanical construction prevents electrical output from being generated even when a moment is present, this embodiment is composed so that the operation of the circuit described above prevents electrical output from being generated even when a moment is present.

Thus, the weighing mechanism 11' for compensation in this embodiment is configured so that only the weight signal is generated with respect to forces acting perpendicularly to the installation surface of the scale, just as is the weighing mechanism 11 for compensation.

Therefore, in configuring the invention, for the weighing apparatus and the weighing mechanism of the weighing mechanism for compensation, whether either the embodiment shown in Figs. 1 and 2 or the embodiment shown in Figs. 7 and 8 is used, the operation effects described above can be obtained in the same way. In the second embodiment, those same operational effects can be obtained even when using the same configuration for the weighing apparatus as that of the weighing mechanism 11' for compensation. Because of the configurations and operation effects described above, even under conditions of oscillation in which multidimensional acceleration and angular acceleration act upon the scale, these have essentially no effect, and accurate weight measurements can be performed.

Therefore, even if it is on board a ship which is subject to constant oscillation on the sea and which moves to various locations on the earth's surface where the gravitational force differs, the scale is capable of performing essentially accurate weight measurements without being affected by such oscillation and without requiring adjustment each time for the gravity (gravitational acceleration) of the location.

This scale can also be used on board an airplane, and, in the same way as for on board a ship, it is capable of performing essentially accurate weight measurements without being affected by acceleration, etc., in the direction of gravity which change in accordance with the flying conditions.

When on a ship or an airplane, the scale of the invention is capable of making weight measurements without hindrance to practical use even when it is installed in a location far from the center of gravity of that ship or airplane, so that it is extremely practical.

The scale of the invention is highly reliable even when used under conditions of oscillation, and it can also be supplied at low cost because the scale is of an extremely simple composition.

## Claims

1. A scale positioned on a surface and capable of performing weight measurements under oscillating conditions of the weight of a material, said scale comprising :

   means for measuring the weight of the material including a tare weight $m_1$ and for producing a detection signal representative of the components of the forces and the moments generated by the acceleration and angular acceleration, including gravity, acting on the tare weight and the material in a direction substantially perpendicular to the surface on which the scale is positioned ;

   means, located in close proximity to said measuring means and having a sensing mass $m_c$, for generating a compensating signal representative of the components of the forces and the moments generated by the acceleration and angular acceleration, including gravity, acting on the sensing mass $m_c$ in a direction substantially perpendicular to the surface on which the scale is positioned ;

   means for amplifying the detection signal to produce a signal e having a gain KA ;

   means for amplifying the compensating signal to produce a signal $e_c$ having a gain $K_c A_c$ such that, when the scale is in a non-oscillating state :

   $$m_1 KAg'' = m_c K_c A_c g'',$$

   where g'' is the acceleration component, including gravity, which is substantially perpendicular to the surface on which the surface is positioned when the scale is in a non-oscillating state ;

   means for providing from the detection signal and the compensating signal a weight signal representative of the weight of the material and corresponding to $(e - e_c)/e_c$ ; and

   wherein the center of gravity of the sensing mass, the center of gravity of the tare weight and the center of gravity of the material are located along a line substantially perpendicular to the surface on which the scale is positioned whereby the effects on the weight signal caused by all forces and moments generated by the acceleration and angular acceleration acting upon the mass of the tare and the material

12

are virtually eliminated.

2. The scale of claim 1 wherein the center of gravity of the sensing mass is at a height from the surface on which the scale is positioned which is approximately equal to a height from the surface on which the scale is positioned of the combined center of gravity of the tare weight and the material whereby the value of the component of acceleration perpendicular to the surface which is the sum of the gravity and acceleration at the position of the combined center of gravity of the tare and the material will be about the same as the value of the component of acceleration perpendicular to the surface which is the sum of the gravity and acceleration at the position of the center of gravity of the sensing mass so that the weight measurements have a high degree of accuracy under oscillating conditions.

3. The scale of claim 2 wherein the measuring means has a characteristic oscillating frequency resulting from loading of the material on the tare weight and wherein a characteristic oscillating frequency of the sensing mass approximately equals the characteristic oscillating frequency of the measuring means.

4. The scale of claim 1 or 2 wherein said measuring means comprises a weighing apparatus having a first structure with fulcrum points having sensors for generating a signal corresponding to the detection signal, said first structure defining a first end supported by the surface and defining a second free end opposite the first side for supporting the tare weight and for receiving the material to be weighed.

5. The scale of claim 4 wherein said generating means comprises a compensating weighing mechanism having a second structure with fulcrum points having sensors for generating a signal corresponding to the compensating signal, said second structure defining a first end supported by the first end of the first structure and defining a second free end, opposite the first end and including the sensing mass.

6. The scale of claim 5 wherein said second structure comprises a single beam.

7. The scale of claim 5 wherein the sensors of the weighing apparatus comprise a first Wheatstone bridge and wherein the sensors of the compensating weighing mechanism comprise a second Wheatstone bridge.

8. The scale of claim 5 wherein said second structure comprises a second parallelogram structure with four fulcrum points having sensors for generating a signal corresponding to the compensating signal, said second parallelogram structure defining a first side supported by the first side of the first parallelogram structure and defining a second side, opposite the first side and including the sensing mass, positioned over the second side of the first parallelogram structure.

9. The scale of claim 4 wherein said first structure comprises a single beam.

10. The scale of claim 4 wherein said first structure comprises a first parallelogram structure with four fulcrum points having sensors for generating a signal corresponding to the detection signal, said first parallelogram structure defining a first side supported by the surface and defining a second side opposite the first side for supporting the tare weight and for receiving the material to be weighed.

EP 0 432 979 A2

Fig. 1

Fig. 4

Fig. 5

Fig. 2

Fig. 3

$$\frac{e - e_c}{e_c}$$

**Fig. 6**

EP 0 432 979 A2

Fig. 7

Fig. 8

Fig. 9

TO AMPLIFIER 31